# DEMANDE DE BREVET EUROPEEN

(11) **EP 4 729 443 A2**
(43) Date de publication de la demande: **22.04.2026**
(21) Numéro de dépôt: 26163003.2
(22) Date de dépôt: 16.11.2020
(51) Int. Cl.: B65G 1/06

(54) **RACK DE STOCKAGE À CAPACITÉ AMÉLIORÉE**

(30) Priorité: 26.11.2019 FR 1913251
(62) Demande divisionnaire de: 20803890.1
(71) Demandeur: Exotec Product France, 59170 Croix (FR)
(72) Inventeur: BAULARD, Gilles, 31470 Fontenilles (FR)
(74) Mandataire: Plasseraud IP

(57) **Abrégé**

Ensemble de stockage (1) comprenant un premier rack de stockage (100) sensiblement parallélépipédique et un deuxième rack de stockage (200) sensiblement parallélépipédique, une face transversale avant (105) du premier rack de stockage (100) et une deuxième face transversale arrière (206) du deuxième rack de stockage (200) étant reliées l'une à l'autre par au moins une structure de contreventement horizontal (500).

## Description

### DOMAINE DE L'INVENTION

L'invention concerne le domaine du stockage de produits et plus particulièrement les dispositifs de stockage intégrés à un système automatisé de stockage et de récupération de produits.

### ARRIERE PLAN DE L'INVENTION

Un ensemble de stockage comprend classiquement plusieurs racks de forme sensiblement parallélépipédique. Un tel rack comprend quatre montants verticaux reliés entre eux par des traverses horizontales qui supportent des rayonnages. Les rayonnages définissent la portion inférieure d'alvéoles de stockage. Généralement, une alvéole de stockage est un volume parallélépipédique correspondant à celui d'une palette standard et un chariot élévateur peut accéder à l'alvéole de stockage via une face principale pour déposer la palette lorsqu'il est nécessaire de prélever un des produits qui y est stocké pour la préparation d'une commande.

Les racks sont généralement disposés de manière à ce que les faces principales des alvéoles de stockage se fassent face. Les racks ainsi disposés délimitent une travée de circulation principale du chariot élévateur qui s'étend entre deux avenues de circulation qui distribuent d'autres travées.

Lorsque l'on souhaite augmenter le volume de stockage pour une surface au sol donnée, l'augmentation de la hauteur des racks pour y ajouter des rayonnages requiert de renforcer les liaisons encastrées entre les montants et les traverses afin de reprendre les efforts horizontaux qui s'appliquent sur les racks. Il apparaît généralement nécessaire de modifier intégralement les montants ce qui, en plus d'être couteux, requiert un démontage-remontage complet et une immobilisation conséquente de l'ensemble de stockage, ce qui représente une importante perte d'exploitation.

### OBJET DE L'INVENTION

L'invention a pour objet d'améliorer la capacité de stockage et/ou de colisage d'un ensemble de stockage occupant une surface au sol définie.

### RESUME DE L'INVENTION

A cet effet, on prévoit un ensemble de stockage comprenant un premier rack de stockage sensiblement parallélépipédique et un deuxième rack de stockage sensiblement parallélépipédique. Le premier rack comporte une première face inférieure en appui sur une surface d'appui, une première face supérieure parallèle à la première face inférieure, une première face longitudinale droite et une première face longitudinale gauche qui relient une première face transversale avant et une première face transversale arrière. Le premier rack définit une pluralité de premières alvéoles de stockage superposées selon une première direction d'empilement s'étendant entre la première face inférieure et la première face supérieure, la pluralité de premières alvéoles de stockage étant accessibles depuis la première face longitudinale gauche et depuis la première face longitudinale droite. Les premières alvéoles sont séparées l'une de l'autre selon la première direction d'empilement par une première distance minimale. Le deuxième rack comporte une deuxième face inférieure en appui sur une surface d'appui, une deuxième face supérieure parallèle à la deuxième face inférieure, une deuxième face longitudinale droite et une deuxième face longitudinale gauche qui relient une deuxième face transversale avant et une deuxième face transversale arrière. Le deuxième rack définit une pluralité de deuxièmes alvéoles de stockage superposées selon une deuxième direction d'empilement s'étendant entre la deuxième face inférieure et la deuxième face supérieure. Les deuxièmes alvéoles de stockage sont accessibles depuis la deuxième face longitudinale gauche et depuis la deuxième face longitudinale droite. Les deuxièmes alvéoles sont séparées l'une de l'autre selon la première direction d'empilement par une deuxième distance minimale. La première face transversale avant et la deuxième face transversale arrière se font face et sont séparées par une distance non nulle. La première face transversale avant et la deuxième face transversale arrière sont reliées l'une à l'autre par au moins une structure de contreventement horizontal. La structure de contreventement horizontal comprend un premier élément de contreventement s'étendant dans un premier plan comprenant la première face longitudinale droite ou la première face longitudinale gauche et/ou la deuxième face longitudinale droite ou la deuxième face longitudinale gauche. Le premier élément de contreventement s'étend depuis la première face supérieure et/ou la deuxième face supérieure jusqu'à une première distance prédéterminée de la première face inférieure et/ou de la deuxième face inférieure. La première distance prédéterminée est comprise entre une et deux fois la première distance minimale ou la deuxième distance minimale.

On obtient ainsi un ensemble de stockage dont le contreventement horizontal ne requiert pas d'intervenir sur la structure de l'élément de rack par exemple par l'ajout de raidisseurs liant des sommets opposés d'un même rack de stockage. Il est alors possible, lorsque l'on souhaite augmenter la hauteur de stockage de l'élément de rack, de conserver la structure d'élément de rack précédente et de la contreventer extérieurement grâce à l'invention. La mise en place du contreventement est particulièrement aisée de par sa mise en place dans un plan comprenant des faces longitudinales. Il est possible de réaliser un contreventement important et/ou de mettre en œuvre des éléments légers et peu couteux car le contreventement s'étend sur presque toute la hauteur de l'élément de rack. Enfin, du fait que la distance prédéterminée soit comprise entre une et deux fois la première ou la deuxième distance minimale, il est possible de développer un contreventement comprenant beaucoup d'éléments structurels sans que cela nuise à la circulation des engins de manutention lorsqu'ils portent un colis issus d'une première alvéole ou d'une deuxième alvéole.

Le contreventement de l'invention permet une construction économique des éléments de racks dans lesquels chaque première alvéole de la pluralité de premières alvéoles de stockage comprend une première paire de glissières parallèles qui s'étendent entre la première face longitudinale droite et la première face longitudinale gauche, les premières paires de glissière étant séparées selon la première direction d'empilement d'une première distance minimale. L'économie est significative lorsque chaque deuxième alvéole de la pluralité de deuxièmes alvéoles de stockage comprend une paire de glissières parallèles s'étendant entre la deuxième face longitudinale droite et la deuxième face longitudinale gauche.

Il est possible de maintenir la circulation de chariot de manutention portant leur colis lorsque la première distance prédéterminée est sensiblement supérieure à la première distance minimale et/ou la deuxième distance minimale.

Un contreventement efficace et simple à mettre en place est obtenu lorsque le premier élément de contreventement comprend un premier treillis.

L'efficacité du contreventement est améliorée lorsque la structure de contreventement horizontal comprend également un deuxième élément de contreventement s'étendant dans un deuxième plan comprenant la première face supérieure et/ou la deuxième face supérieure. Avantageusement, le deuxième élément de contreventement comprend un deuxième treillis.

Avantageusement, l'ensemble de stockage comprend également un troisième rack de stockage sensiblement parallélépipédique et un quatrième rack de stockage sensiblement parallélépipédique. Le troisième rack comporte une troisième face inférieure en appui sur la surface d'appui, une troisième face supérieure parallèle à la troisième face inférieure, une troisième face longitudinale droite et une troisième face longitudinale gauche qui relient une troisième face transversale avant et une troisième face transversale arrière, une des troisièmes faces longitudinales droite ou gauche faisant face à une des premières faces longitudinales droite ou gauche. Le quatrième rack comporte une quatrième face inférieure en appui sur la surface d'appui, une quatrième face supérieure parallèle à la quatrième face inférieure, une quatrième face longitudinale droite et une quatrième face longitudinale gauche qui relient une quatrième face transversale avant et une quatrième face transversale arrière, une des quatrièmes faces longitudinales droite ou gauche faisant face à une des deuxièmes faces longitudinales droite ou gauche. La structure de contreventement horizontal comprend un troisième élément de contreventement s'étendant dans un troisième plan comprenant la première face supérieure et/ou la deuxième face supérieure et/ou la troisième face supérieure et/ou la quatrième face supérieure. Le troisième élément de contreventement reliant le premier rack, le deuxième rack, le troisième rack et le quatrième rack.

Un contreventement simple et économique est réalisé lorsque le troisième élément de contreventement comprend un troisième treillis.

L'invention concerne également un système de préparation de commande comprenant un ensemble de stockage selon l'invention, comprenant en outre un chariot à guidage automatisé pourvu d'un plateau de manutention d'un colis.

D'autres caractéristiques et avantages de l'invention apparaîtront à la lecture de la description qui suit de modes de réalisation particuliers non limitatifs de l'invention.

### BREVE DESCRIPTION DES DESSINS

Il sera fait référence aux figures jointes parmi lesquelles
[Fig. 1] la figure 1 est une vue schématique en perspective d'un ensemble de stockage selon l'invention ;
[Fig. 2] la figure 2 est une vue schématique en perspective de détail d'un élément de rack de la figure 1 ;
[Fig. 3] la figure 3 est une vue schématique de dessus de l'ensemble de stockage de la figure 1 ;
[Fig. 4] la figure 4 est une vue schématique en perspective d'un chariot de l'ensemble de stockage de la figure 1 ;
[Fig. 5] la figure 5 est une vue schématique de côté de l'ensemble de stockage de la figure 1 ;
[Fig. 6] la figure 6 est une vue schématique de dessus de l'ensemble de stockage de la figure 1 ;
[Fig. 7] la figure 7 est une vue schématique en perspective d'une première étape d'un procédé de calage de chaine selon l'invention ;
[Fig. 8] la figure 8 est une vue schématique en perspective d'une deuxième étape d'un procédé de calage de chaine selon l'invention ;
[Fig. 9] la figure 9 est une vue schématique en perspective d'une troisième étape d'un procédé de calage de chaine selon l'invention ;
[Fig. 10] la figure 10 est une vue schématique en perspective d'une quatrième étape d'un procédé de calage de chaine selon l'invention ;
[Fig. 11] la figure 11 est une vue schématique en perspective d'une cinquième étape d'un procédé de calage de chaine selon l'invention ;
[Fig. 12] la figure 12 est une vue schématique en perspective d'une sixième étape d'un procédé de calage de chaine selon l'invention ;
[Fig. 13] la figure 13 est une vue schématique en perspective d'une septième étape d'un procédé de calage de chaine selon l'invention ;
[Fig. 14] la figure 14 est une vue schématique en perspective d'une huitième étape d'un procédé de calage de chaine selon l'invention ;
[Fig. 15] la figure 15 est une vue schématique en perspective d'une neuvième étape d'un procédé de calage de chaine selon l'invention ;
[Fig. 16] la figure 16 est une vue schématique d'un deuxième montant traité selon le procédé de l'invention ;
[Fig. 17] la figure 17 est une vue schématique en perspective d'une dixième étape d'un procédé de calage de chaine selon l'invention ;
[Fig. 18] la figure 18 est une vue schématique de dessus de l'ensemble de stockage de la figure 1.

### DESCRIPTION DETAILLEE DE L'INVENTION

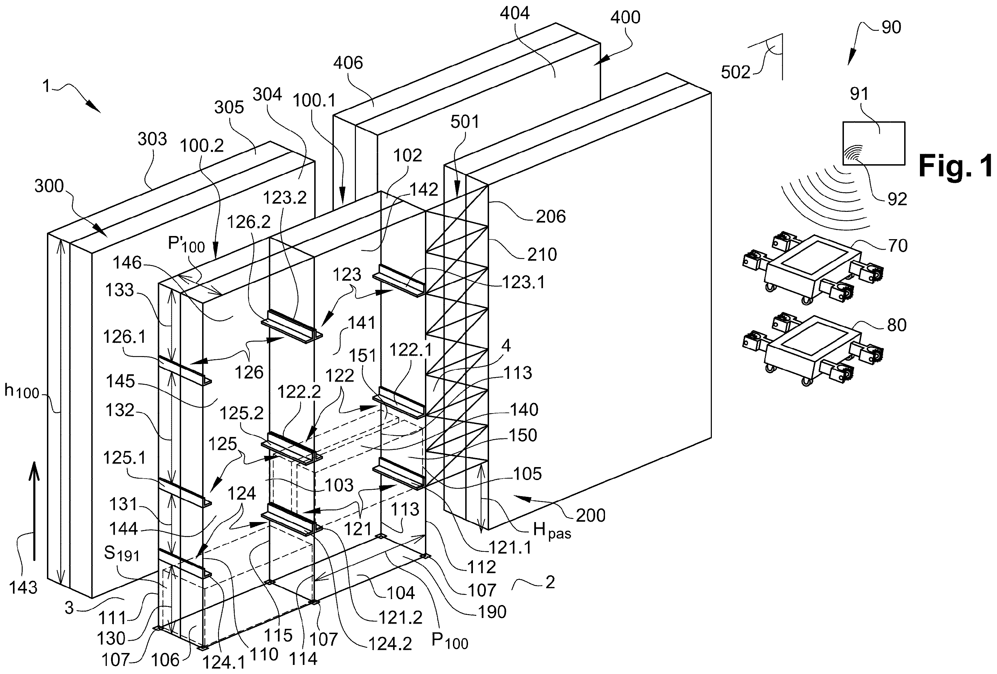

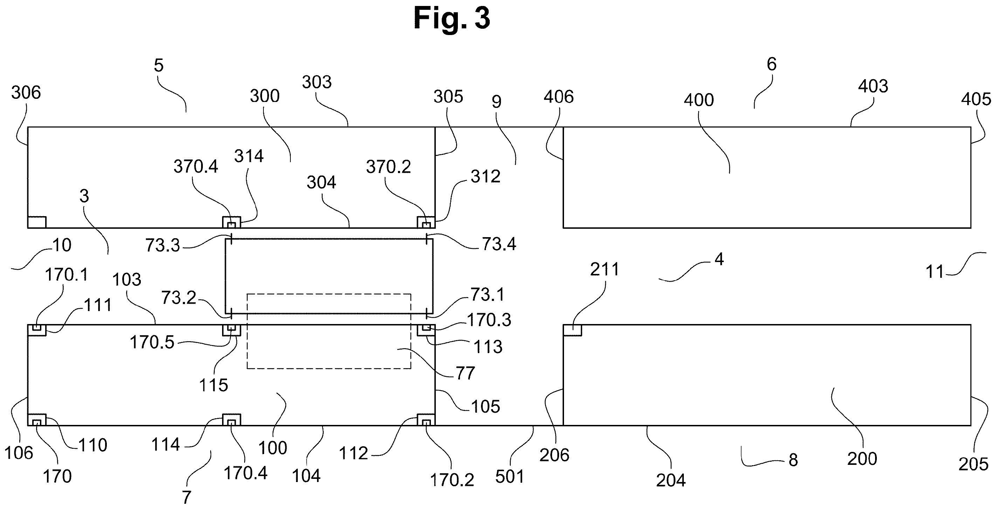

En référence aux figures 1 à 6, l'ensemble de stockage selon l'invention, et généralement désigné 1, comprend un premier rack de stockage 100, un deuxième rack de stockage 200, un troisième rack de stockage 300 et un quatrième rack de stockage 400.

Le premier rack de stockage 100 est sensiblement parallélépipédique et comporte une première face inférieure 101 en appui sur une surface d'appui -ici un sol 2 en béton d'un entrepôt non représenté. Le premier rack 100 comprend également une première face supérieure 102 parallèle à la première face inférieure 101 séparées par une première hauteur h₁₀₀, une première face longitudinale droite 104 et une première face longitudinale gauche 103
- ici sensiblement verticales- séparées par une première profondeur p₁₀₀- ici égale à neuf cent cinq millimètres. La première face longitudinale gauche 103 et la première face longitudinale droite 104 relient une première face transversale avant 105 et une première face transversale arrière 106 séparées par une première largeur l₁₀₀.

Le premier rack 100 comprend un premier montant arrière droit 110, un premier montant arrière gauche 111, un premier montant avant droit 112 et un premier montant avant gauche 113, parallèles entre eux et qui définissent les arêtes verticales du premier rack 100. Le premier rack 100 comprend également un premier montant intermédiaire droit 114 équidistant du premier montant arrière droit 110 et du premier montant avant droit 112. Le premier rack 100 comprend également un premier montant intermédiaire gauche 115 équidistant du premier montant arrière gauche 111 et du premier montant avant gauche 113. Le premier montant arrière droit 110, le premier montant avant droit 112 et le premier montant intermédiaires droit 114 s'étendent dans le plan de la première face longitudinale droite 104 et sont fixés au sol 2 à l'aide de platines d'ancrage 107 coopérant avec des tiges filetées scellées au sol 2 non représentées. Le premier montant principal arrière gauche 111, le premier montant avant gauche 113 et le premier montant intermédiaires gauche 115 s'étendent dans le plan de la première face longitudinale gauche 103 et sont fixés au sol 2 à l'aide de platines d'ancrage 107 coopérant avec des tiges filetées scellées au sol 2 non représentées.

Le premier rack 100 comprend également une première paire de glissières inférieures avant 121 qui s'étend entre la première face longitudinale droite 104 et la première face longitudinale gauche 103. La première paire de glissières inférieures avant 121 comprend une première glissière inférieure avant 121.1 et une première glissière inférieure médiane avant 121.2, ici sous la forme de cornières métalliques. La première glissière inférieure avant 121.1 s'étend parallèlement à la première face inférieure 101 et est boulonnée d'une part au premier montant avant droit 112 et d'autre part au premier montant avant gauche 113. La première glissière inférieure avant médiane 121.2 s'étend parallèlement à la première face inférieure 101 et est boulonnée d'une part au premier montant intermédiaire droit 114 et d'autre part au premier montant intermédiaire gauche 115. La première paire de glissières inférieures avant 121 s'étend à une première distance de base 130 -ici égale à quatre-cent-quatre-vingt-quinze millimètres- de la première face inférieure 101.

Le premier rack 100 comprend également une première paire de glissières intermédiaires avant 122 qui s'étend entre la première face longitudinale droite 104 et la première face longitudinale gauche 103. La première paire de glissières intermédiaires avant 122 comprend une première glissière intermédiaire avant 122.1 et une première glissière intermédiaire médiane avant 122.2, ici sous la forme de cornières métalliques. La première glissière intermédiaire avant 122.1 s'étend parallèlement à la première face inférieure 101 et est boulonnée d'une part au premier montant avant droit 112 et d'autre part au premier montant avant gauche 113. La première glissière intermédiaire avant médiane 122.2 s'étend parallèlement à la première face inférieure 101 et est boulonnée d'une part au premier montant intermédiaire droit 114 et d'autre part au premier montant intermédiaire gauche 115. La première paire de glissières intermédiaires avant 122 s'étend à une première distance inférieure 131 -ici égale à deux cent vingt-cinq millimètres- de la première paire de glissières inférieures avant 121.

Le premier rack 100 comprend également une première paire de glissières supérieures avant 123 qui s'étend entre la première face longitudinale droite 104 et la première face longitudinale gauche 103. La première paire de glissières supérieures avant 123 comprend une première glissière supérieure avant 123.1 et une première glissière supérieure médiane avant 123.2, ici sous la forme de cornières métalliques. La première glissière supérieure avant 123.1 s'étend parallèlement à la première face inférieure 101 et est boulonnée d'une part au premier montant avant droit 112 et d'autre part au premier montant avant gauche 113. La première glissière supérieure avant médiane 123.2 s'étend parallèlement à la première face inférieure 101 et est boulonnée d'une part au premier montant intermédiaire droit 114 et d'autre part au premier montant intermédiaire gauche 115.

La première paire de glissières supérieures avant 123 s'étend à une première distance intermédiaire 132-ici égale à trois cent vingt-cinq millimètres- de la première paire de glissières intermédiaires avant 122 et à une première distance supérieure 133 -ici égale à deux cent vingt-cinq millimètres- de la première face supérieure 102.

De manière homologue, le premier rack 100 comprend également une première paire de glissières inférieures arrière 124 qui s'étend entre la première face longitudinale droite 104 et la première face longitudinale gauche 103. La première paire de glissières inférieures arrière 124 comprend une première glissière inférieure arrière 124.1 et une première glissière inférieure médiane arrière 124.2, ici sous la forme de cornières métalliques. La première glissière inférieure arrière 124.1 s'étend parallèlement à la première face inférieure 101 et est boulonnée d'une part au premier montant arrière droit 110 et d'autre part au premier montant arrière gauche 111. La première glissière inférieure arrière médiane 124.2 s'étend parallèlement à la première face inférieure 101 et est boulonnée d'une part au premier montant intermédiaire droit 114 et d'autre part au premier montant intermédiaire gauche 115. La première paire de glissières inférieures arrière 124 s'étend à une première distance de base 130 de la première face inférieure 101.

Le premier rack 100 comprend également une première paire de glissières intermédiaires arrière 125 qui s'étend entre la première face longitudinale droite 104 et la première face longitudinale gauche 103. La première paire de glissières intermédiaires arrière 125 comprend une première glissière intermédiaire arrière 125.1 et une première glissière intermédiaire médiane arrière 125.2, ici sous la forme de cornières métalliques. La première glissière supérieure arrière 126.1 s'étend parallèlement à la première face inférieure 101 et est boulonnée d'une part au premier montant arrière droit 110 et d'autre part au premier montant arrière gauche 111. La première glissière intermédiaire arrière médiane 125.2 s'étend parallèlement à la première face inférieure 101 et est boulonnée d'une part au premier montant intermédiaire droit 114 et d'autre part au premier montant intermédiaire gauche 115. La première paire de glissière intermédiaires arrière 125 s'étend à une première distance inférieure 131 de la première paire de glissières inférieures 124.

Le premier rack 100 comprend également une première paire de glissières supérieures arrière 126 qui s'étend entre la première face longitudinale droite 104 et la première face longitudinale gauche 103. La première paire de glissières supérieures arrière 126 comprend une première glissière supérieure arrière 126.1 et une première glissière supérieure médiane arrière 126.2, ici sous la forme de cornières métalliques. La première glissière supérieure arrière 126.1 s'étend parallèlement à la première face inférieure 101 et est boulonnée d'une part au premier montant arrière droit 110 et d'autre part au premier montant arrière gauche 111. La première glissière supérieure arrière médiane 126.2 s'étend parallèlement à la première face inférieure 101 et est boulonnée d'une part au premier montant intermédiaire droit 114 et d'autre part au premier montant intermédiaire gauche 115.

La première paire de glissières supérieures arrière 126 s'étend à une première distance intermédiaire 132 de la première paire de glissières intermédiaire arrière 125 et à une première distance supérieure 133 de la première face supérieure 102.

Le premier montant avant droit 112, le premier montant avant gauche 113, le premier montant intermédiaire droit 114, le premier montant intermédiaire gauche 115 ainsi que la première paire de glissière inférieure avant 121, la première paire de glissière intermédiaire avant 122 et la première paire de glissière supérieure avant 123 composent un premier élément avant 100.1 de premier rack 100.

Le premier montant arrière droit 110, le premier montant arrière gauche 111, le premier montant intermédiaire droit 114, le premier montant intermédiaire gauche 115 ainsi que la première paire de glissière inférieure arrière 124, la première paire de glissière intermédiaire arrière 125 et la première paire de glissière supérieure arrière 126 composent un premier élément arrière 100.2 de premier rack 100.

Le volume sensiblement parallélépipédique délimité en sa partie inférieure par la première paire de glissières inférieures avant 121, sur ses flancs par le premier montant avant droit 112, le premier montant avant gauche 113, le premier montant intermédiaire droit 114, le premier montant intermédiaire 115 et en sa partie supérieure par la première paire de glissières intermédiaire avant 122 correspond à une première alvéole inférieure avant 140 de stockage.

Une première alvéole intermédiaire avant 141 de stockage est délimitée en sa partie inférieure par la première paire de glissières intermédiaire 122, sur ses flancs par le premier montant avant droit 112, le premier montant avant gauche 113, le premier montant intermédiaire droit 114, le premier montant intermédiaire 115 et en sa partie supérieure par la première paire de glissières supérieure avant 123.

Une première alvéole supérieure avant 142 de stockage est délimitée en sa partie inférieure par la première paire de glissières supérieures avant 123, sur ses flancs par le premier montant avant droit 112, le premier montant avant gauche 113, le premier montant intermédiaire droit 114, le premier montant intermédiaire 115 et en sa partie supérieure par la première face supérieure 102.

La première alvéole intermédiaire avant 141 et la première alvéole supérieure avant 142 sont superposées sur la première alvéole inférieure avant 140 selon une première direction d'empilement 143 verticale. La hauteur de la première alvéole inférieure avant 140 considérée selon la première direction d'empilement 143 est égale à la première distance inférieure 131.

La hauteur de la première alvéole intermédiaire avant 141 considérée selon la première direction d'empilement 143 est égale à la première distance intermédiaire 132.

La hauteur de la première alvéole supérieure avant 142 considérée selon la première direction d'empilement 143 est égale à la première distance supérieure 133.

Le volume sensiblement parallélépipédique délimité en sa partie inférieure par la première paire de glissières inférieures arrière 124, sur ses flancs par le premier montant arrière droit 110, le premier montant arrière gauche 111, le premier montant intermédiaire droit 114, le premier montant intermédiaire 115 et en sa partie supérieure par la première paire de glissières intermédiaire arrière 125 correspond à une première alvéole inférieure arrière 144 de stockage.

Une première alvéole intermédiaire arrière 145 de stockage est délimitée en sa partie inférieure par la première paire de glissières intermédiaire arrière 125, sur ses flancs par le premier montant arrière droit 110, le premier montant arrière gauche 111, le premier montant intermédiaire droit 114, le premier montant intermédiaire 115 et en sa partie supérieure par la première paire de glissières supérieures arrière 126.

Une première alvéole supérieure arrière 146 de stockage est délimitée en sa partie inférieure par la première paire de glissières supérieures arrière 126, sur ses flancs par le premier montant arrière droit 110, le premier montant arrière gauche 111, le premier montant intermédiaire droit 114, le premier montant intermédiaire 115 et en sa partie supérieure par la première face supérieure 102.

La première alvéole intermédiaire arrière 145 et la première alvéole supérieure arrière 146 sont superposées sur la première alvéole inférieure arrière 144 selon la première direction d'empilement 143 verticale. La hauteur de la première alvéole inférieure arrière 144 considérée selon la première direction d'empilement 143 est égale à la première distance inférieure 131.

La hauteur de la première alvéole intermédiaire arrière 145 considérée selon la première direction d'empilement 143 est égale à la première distance intermédiaire 132.

La hauteur de la première alvéole supérieure arrière 146 considérée selon la première direction d'empilement 143 est égale à la première distance supérieure 133.

Comme visible sur la figure 1, la première distance intermédiaire 132 est supérieure à la première distance inférieure 131 et à la première distance supérieure 133.

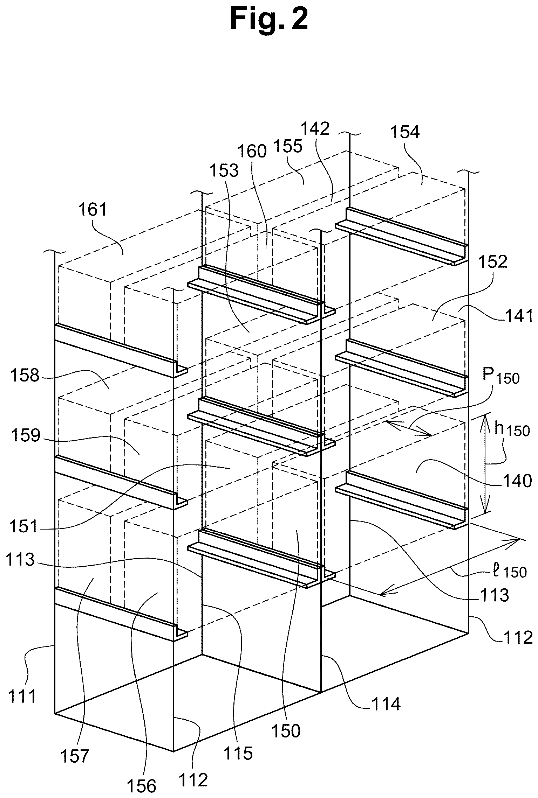

La première alvéole inférieure avant 140 reçoit un premier conteneur inférieur avant droit 150 et un premier conteneur inférieur avant gauche 151 montés tous deux à coulissement sur la première paire de glissières inférieur avant 121. Le premier conteneur inférieur avant droit 150 et le premier conteneur inférieur avant gauche 151 sont, ici, identiques et de forme sensiblement parallélépipédique. Comme visible en figure 2, le premier conteneur inférieur avant droit 150 a une hauteur h₁₅₀ sensiblement inférieure à la première distance inférieure 131. La largeur l₁₅₀ du premier conteneur inférieur avant droit 150 est sensiblement égale à la moitié de la première largeur l₁₀₀. La profondeur p₁₅₀ du premier conteneur inférieur avant droit 150 est sensiblement égale à la moitié de la première profondeur p₁₀₀. Ainsi, la première alvéole inférieure avant 140 étant ouverte et donc accessible depuis la première face longitudinale droite 104 et la première face longitudinale gauche 103, il est possible d'accéder au premier conteneur avant droit 150 sans devoir manutentionner le premier conteneur avant gauche 151, et vice-versa.

De manière homologue, la première alvéole intermédiaire avant 141 reçoit un premier conteneur intermédiaire avant droit 152 et un premier conteneur intermédiaire avant gauche 153.

La première alvéole supérieure avant 142 reçoit un premier conteneur supérieur avant droit 154 et un premier conteneur supérieur avant gauche 155. La première alvéole inférieure arrière 144 reçoit un premier conteneur inférieur arrière droit 156 et un premier conteneur inférieur arrière gauche 157. La première alvéole intermédiaire arrière 145 reçoit un premier conteneur intermédiaire arrière droit 158 et un premier conteneur intermédiaire arrière gauche 159.

La première alvéole supérieure arrière 146 reçoit un premier conteneur supérieur arrière droit 160 et un premier conteneur supérieur arrière gauche 161.

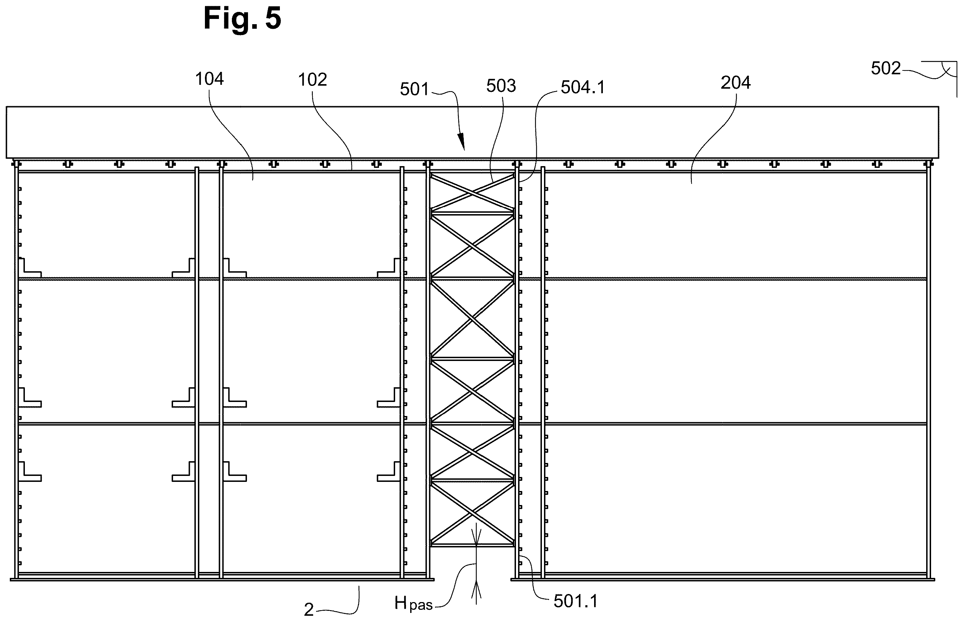

Comme visible en figures 1 et 5, un premier volume 190 avant de passage libre sensiblement parallélépipédique est délimité par la première face inférieure 101 et la première paire de glissières inférieures avant 121. Le premier montant avant droit 112, le premier montant avant gauche 113, le premier montant intermédiaire droit 114 et le premier montant intermédiaire gauche 115 définissent les arêtes verticales du premier volume avant 190.

Le premier volume 190 avant possède une première section avant de passage S190 dont la première dimension selon une direction verticale est égale à la première distance de base 130, soit quatre-cent-quatre-vingt-quinze millimètres. La deuxième dimension de la section S190 selon une direction transversale reliant la première face longitudinale gauche 103 et la première face longitudinale droite 104 est sensiblement égale à la première profondeur p100, c'est-à-dire neuf-cent-cinquante millimètres.

Un premier volume 191 arrière de passage libre sensiblement parallélépipédique est délimité par la première face inférieure 101 et la première paire de glissières inférieures arrière 124. Le premier montant arrière droit 110, le premier montant arrière gauche 111, le premier montant intermédiaire droit 114 et le premier montant intermédiaire gauche 115 définissent les arêtes verticales du premier volume arrière 191.

Le premier volume 191 avant possède une première section arrière S191 identique à la première section avant de passage S190.

Le premier montant arrière droit 110 est pourvu d'une première chaine arrière droite 170 de grimpe à trois-cents maillons s'étendant verticalement le long du premier montant arrière droit 110. Le premier montant arrière gauche 111 est pourvu d'une première chaine arrière gauche 170.1 de grimpe à trois-cents maillons s'étendant verticalement le long du premier montant arrière gauche 111. Le premier montant avant droit 112 est pourvu d'une première chaine avant droite 170.2 de grimpe à trois-cents maillons s'étendant verticalement le long du premier montant avant droit 112. Le premier montant avant gauche 113 est pourvu d'une première chaine avant gauche 170.3 de grimpe à trois-cents maillons s'étendant verticalement le long du premier montant avant gauche 113. Le premier montant intermédiaire droit 114 est pourvu d'une première chaine intermédiaire droite 170.4 de grimpe à trois-cents maillons s'étendant verticalement le long du premier montant intermédiaire droit 114. Le premier montant intermédiaire gauche 115 est pourvu d'une première chaine intermédiaire gauche 170.5 de grimpe à trois-cents maillons s'étendant verticalement le long du premier montant intermédiaire gauche 115.

Le montage et le calage des chaines de grimpe 170 à 170.5 va être décrit en référence au montage et au calage de la première chaîne avant gauche 170.3 et de la première chaine intermédiaire gauche 170.5 respectivement sur le premier montant avant gauche 113 et le premier montant intermédiaire gauche 115.

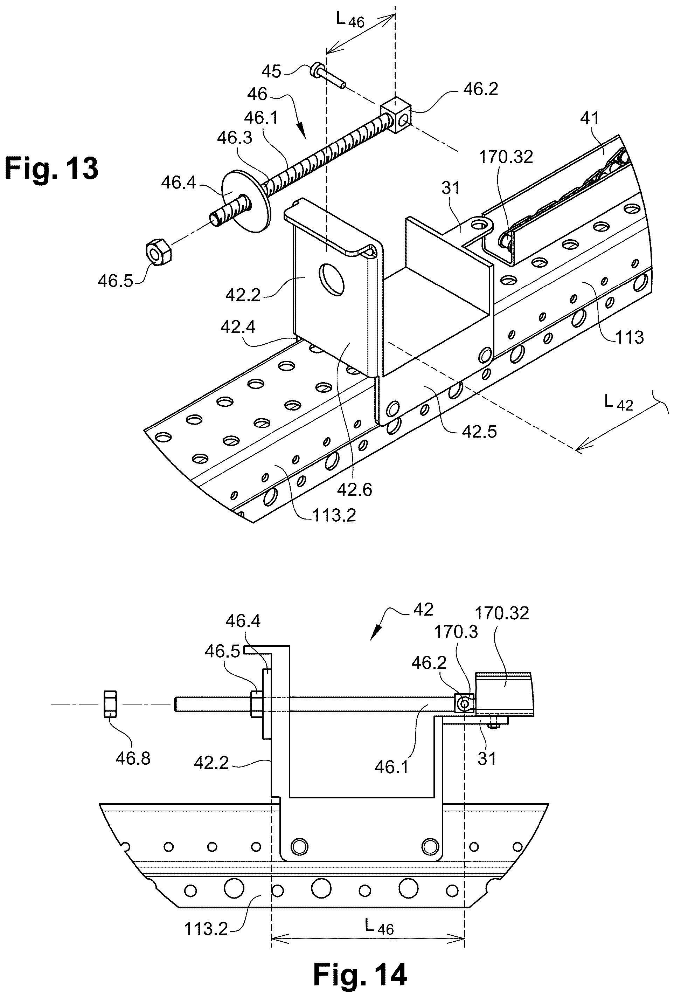

Le procédé de calage du premier montant avant gauche 113 et du premier montant intermédiaire gauche 115 est décrit en référence aux figures 14 à 17.

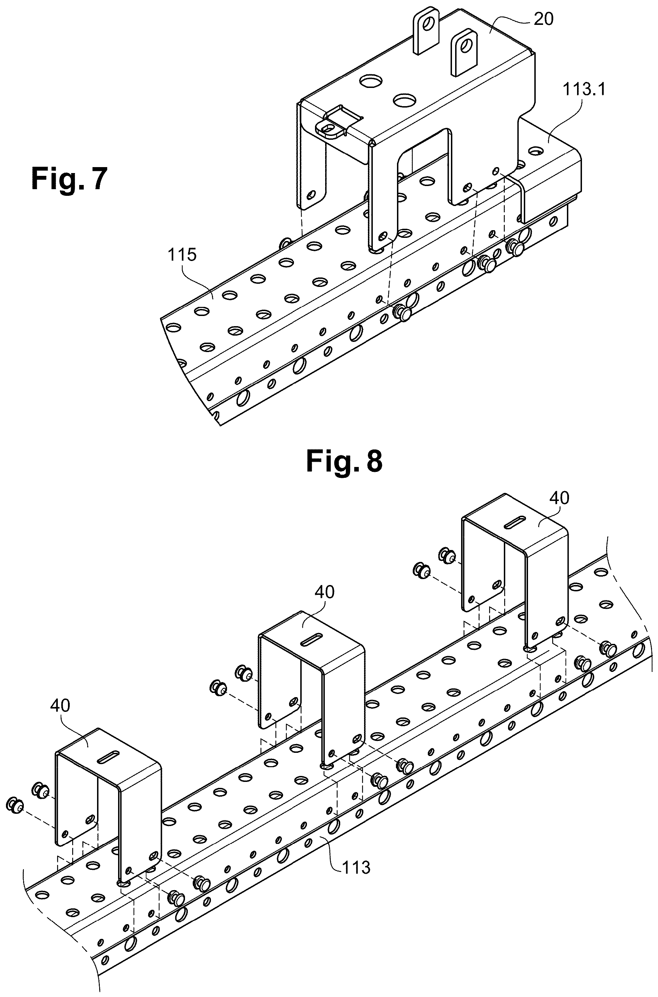

Selon une première étape représentée en figure 7, le premier montant avant gauche 113 (ici un profilé en U perforé) étant dans une position de montage sensiblement horizontale, un premier connecteur inférieur avant gauche - ici un premier dispositif de guidage inférieur 20 avant gauche - est boulonné sur une première portion inférieure avant gauche 113.1 du premier montant avant gauche 113.

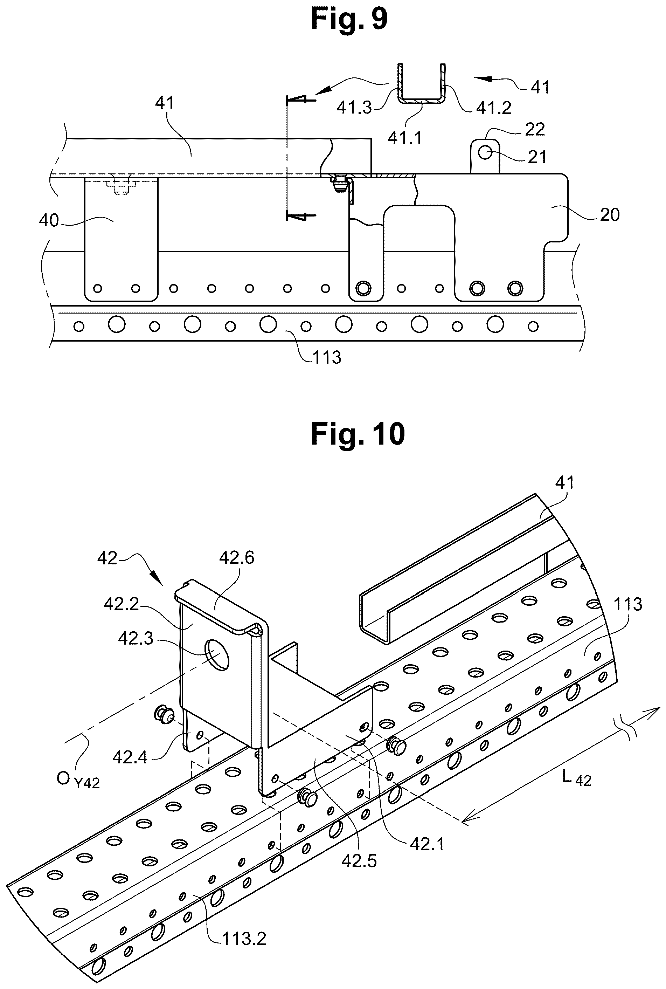

Selon une deuxième étape représentée en figure 8, des premiers cavaliers 40 sont boulonnées sur le montant 113 à intervalles réguliers. Selon une troisième étape représentée en figure 9, un premier profilé 41 -ici un profilé dont la section est en forme de U- est boulonné sur les cavaliers 40 et sur le premier dispositif de guidage inférieur 20 avant gauche. Le premier profilé 41 comprend une première âme 41.1 qui relie une première aile droite 41.2 et une première aile gauche 41.3 respectivement terminées par un premier méplat droit 41.4 et un premier méplat gauche 41.5 s'étendant sensiblement orthogonalement à la première aile droite 41.2 et à la première aile gauche 41.3.

Selon une quatrième étape représentée en figure 10, un premier connecteur supérieur avant gauche 42 est boulonné sur une première portion supérieure 113.2 du premier montant avant gauche 113. Le premier connecteur supérieur avant gauche 42 comprend un châssis 42.1 pourvu d'une paroi transversale 42.2 qui porte un premier perçage 42.3. Le châssis 42.1 comprend un pan droit 42.4 et un pan gauche 42.5 respectivement boulonnés su l'aile droite et l'aile gauche du premier montant avant gauche 113.

Le premier connecteur supérieur avant gauche 42 est implanté sur une première portion supérieure 113.2 du premier montant avant gauche 113 à une première distance prédéterminée L₄₂ du premier dispositif de guidage inférieur 20 avant gauche. La distance prédéterminée L₄₂ s'étend, ici, entre l'axe O21 d'un alésage 21 d'une première paire de brides 22 du premier dispositif de guidage inférieur 20 avant gauche et la surface supérieure 42.6 de la paroi transversale 42.2.

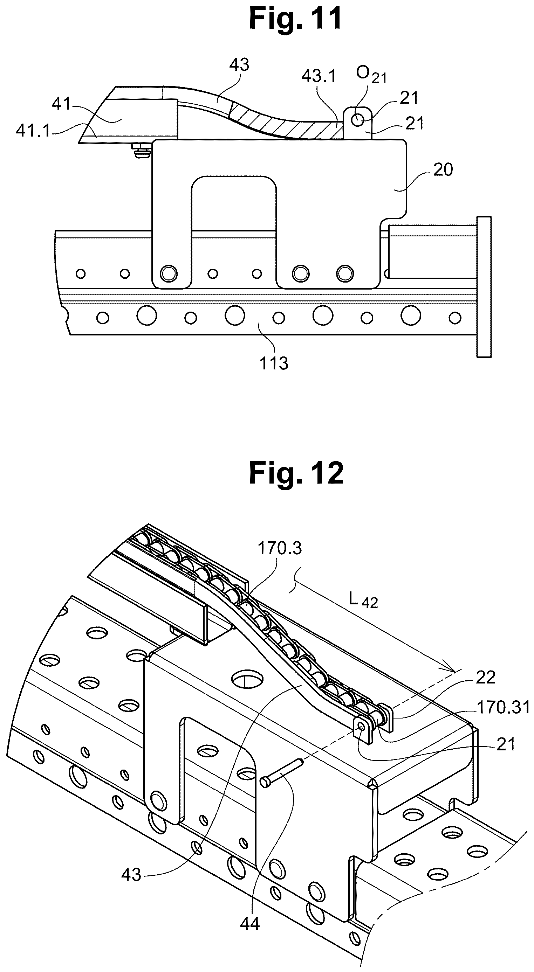

Selon une cinquième étape représentée en figure 11, un premier plat 43 en nitrile est déposé sur l'âme 41.1 du profilé 41 de manière à ce que son extrémité inférieure 43.1 vienne sensiblement à l'aplomb de l'axe O21 du premier dispositif de guidage inférieur 20 avant gauche. Selon une sixième étape représentée en figure 12, une première extrémité inférieure 170.31 de la première chaîne avant gauche 170.3 est fixée à la première paire de brides 22 à l'aide d'une première broche 44. Selon une septième étape représentée en figure 13, une première extrémité supérieure 170.32 de la première chaîne avant gauche 170.3 est reliée par une attache rapide de chaîne 45 au premier tendeur à chaine 46.

Le premier tendeur à chaîne 46 comprend une tige filetée 46.1 pourvue d'une part d'un alésage 46.2 d'accueil de la deuxième attache rapide de chaîne 45 et d'autre part une extrémité filetée libre 46.3 pour recevoir une rondelle 46.4 d'appui et un écrou 46.5. La tige filetée 46.5 s'étend au travers du premier perçage 42.3 de la paroi transversale et au travers de la rondelle 46.4 d'appui. Selon une huitième étape représentée en figure 14, on agit sur l'écrou 46.5 pour ajuster une distance L₄₆ séparant la première extrémité supérieure 170.32 de la première chaîne avant gauche 170.3 de la paroi transversale 42.2 et l'amener à une valeur d₄₆ prédéterminée- ici égale à vingt-deux millimètres. Un contre-écrou 46.8 bloque la position de la tige filetée 46.1 relativement au premier connecteur supérieur avant gauche 42 et immobilise ainsi la position de la première extrémité supérieure 170.32 de la première chaine avant gauche 170.3 relativement au premier montant 113. En ajustant la distance L46, on agit sur la distance L_{170.3} qui sépare la première extrémité inférieure 170.31 et la première extrémité supérieure 170.32 de la première chaine avant gauche 170.3 de manière à ce qu'elle soit égale à deux mille cinq-cents millimètres.

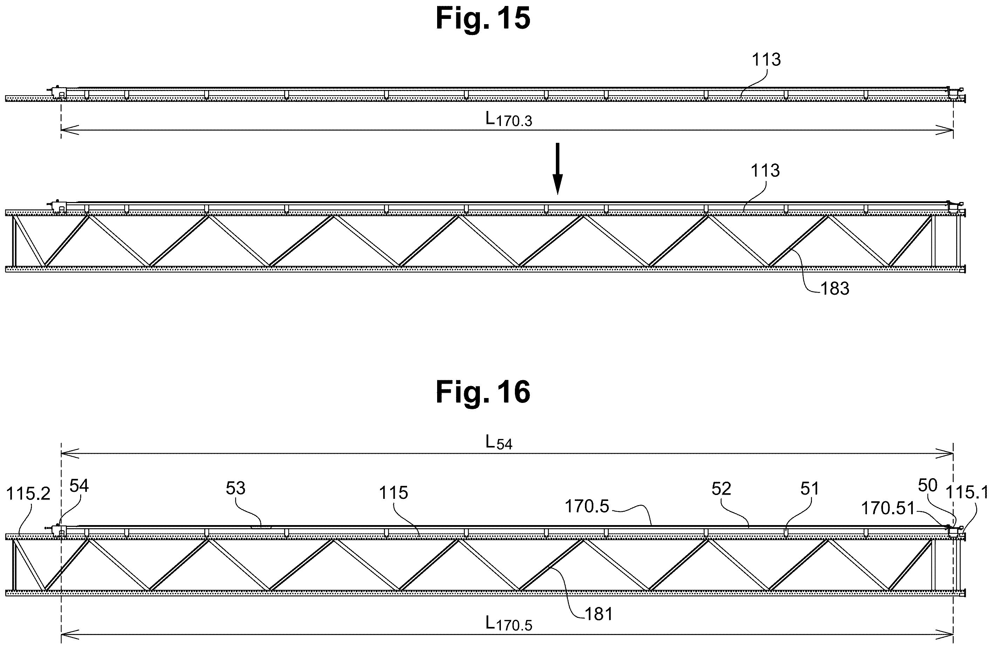

Selon une neuvième étape représentée en figure 15, un premier treillis avant gauche de renfort 183 est monté sur le premier montant avant gauche 113.

Le premier montant intermédiaire gauche 115 est traité de façon identique et reçoit un deuxième dispositif de guidage inférieur 50 sur une deuxième portion inférieure 115.1 du premier montant intermédiaire gauche 115. Comme visible en figure 16, des deuxièmes cavaliers 51 boulonnés sur le premier montant intermédiaire gauche 115 supportent un profilé 52 identique au premier profilé 41 qui reçoit un deuxième plat 53 en nitrile. Un deuxième connecteur supérieur intermédiaire gauche 54 est implanté sur une deuxième extrémité supérieure 115.2 du premier montant intermédiaire gauche 115 à une deuxième distance prédéterminée L₅₄ du deuxième dispositif de guidage inférieur 50 intermédiaire gauche.

La première extrémité inférieure 170.51 de la première chaine intermédiaire gauche 170.5 est reliée au deuxième dispositif de guidage inférieur 50 et la première extrémité supérieure 170.52 de la première chaine intermédiaire gauche 170.5 est reliée deuxième connecteur supérieur intermédiaire gauche 54. La distance L_{170.5} séparant la première extrémité inférieure 170.51 et la première extrémité supérieure 170.32 de la première chaine intermédiaire gauche 170.5 est ajustée en agissant sur un deuxième tendeur à chaîne 55 identique au premier tendeur à chaine 46 de manière à ce que la distance L_{170.5} soit égale à neuf mille millimètres. Un premier treillis intermédiaire gauche de renfort 185 est monté sur le premier montant intermédiaire gauche 115.

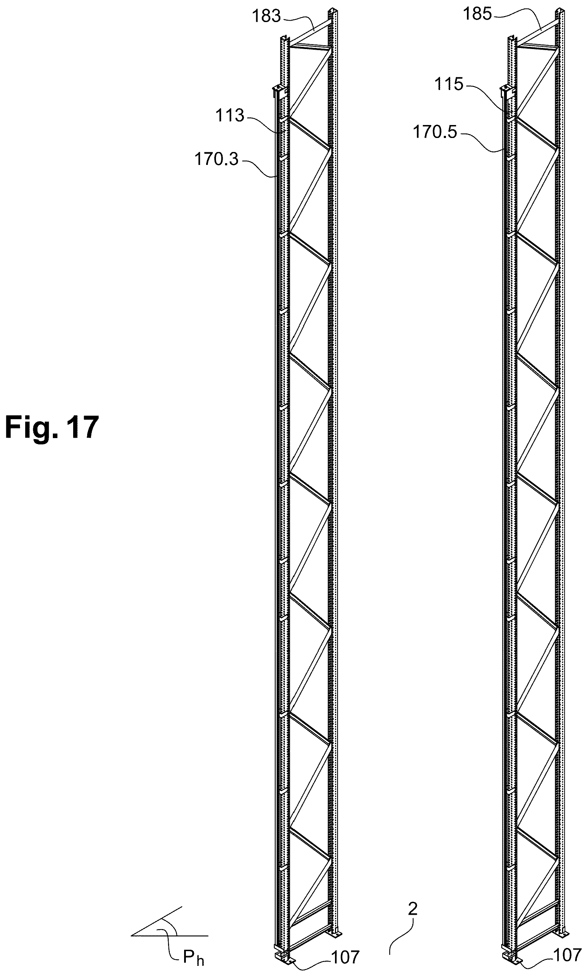

Selon une dixième étape suivante représentée en figure 17, le premier montant avant gauche 113 et le premier montant intermédiaire gauche 115 -pourvus respectivement du premier treillis avant gauche 183 et du premier treillis intermédiaire gauche 185- sont positionnés verticalement, les platines 107 reposant sur le sol 2.

Selon une étape de réglage finale, la position du premier montant avant gauche 113 et la position du premier montant intermédiaire gauche 115 sont réglées de manière à ce que la première extrémité inférieure 170.31 de la première chaine avant gauche 170.3 et la première extrémité inférieure 170.51 de la première chaine intermédiaire gauche 170.5 soient comprises dans un plan horizontal Ph. Une fois ces positions réglées, un calage adapté est, le cas échéant, réalisé entre les platines 107 et le sol 2.

Le montage de la première chaine arrière droite 170, de la première chaîne arrière gauche 170.1, de la première chaine avant droite 170.2 et de la première chaine intermédiaire droite 170.4 est réalisé de manière identique de manière à placer les premières extrémités de chacune de ces chaines dans le même plan horizontal Ph.

La fixation du dispositif de guidage 20 sur la première portion inférieure avant gauche 113.1 du premier montant avant gauche 113 lors de la première étape du procédé décrit ci -avant se fait par boulonnage.

La jonction du premier profilé 41 au dispositif de guidage 20 selon la deuxième étape du procédé décrit ci-avant se fait avantageusement en boulonnant le premier profilé 41sur une oreille 31 du châssis 42.1.

Enfin, et comme visible en figure 22, lors de la sixième étape de fixation de la première extrémité inférieure 170.31 de la première chaine avant gauche 170.3 à l'arrêt 21, la première extrémité inférieure 170.31 est introduite entre la paire d'oreille 22 et une première broche 44 est introduite à travers l'alésage 21 pour s'étendre dans un alésage de la première extrémité inférieure 170.31.

Le deuxième rack 200, le troisième rack 300 et la quatrième rack 400 sont, ici, identiques au premier rack 100. Les éléments identiques ou analogues à ceux décrits en référence au premier rack 100 porteront une même référence numérique augmentée d'une centaine lorsqu'ils concernent le deuxième rack 200, augmentée de deux centaines lorsqu'ils concernent le troisième rack 300 et augmentée de trois centaines lorsqu'ils concernent le quatrième rack 400.

Ainsi, et comme visible en figure 1, la deuxième face transversale arrière 206 du deuxième rack 200 fait face à la première face transversale avant 105 du premier rack 100. La troisième face longitudinale droite 304 du troisième rack 300 fait face à la première face longitudinale gauche 103 du premier rack 100 et définit une travée centrale arrière 3 de circulation. Le quatrième rack 400 est positionné de manière à ce que la quatrième face transversale arrière 406 du quatrième rack 400 fasse face à la troisième face transversale avant 305 du troisième rack 300. La quatrième face longitudinale droite 404 du quatrième rack 400 fait alors face à la deuxième face longitudinale gauche 203 du deuxième rack 200 et définit une travée centrale avant 4 de circulation. Une travée arrière gauche 5 de circulation s'étend le long de la troisième face longitudinale gauche 303. Une travée avant gauche 6 de circulation s'étend le long de la quatrième face longitudinale gauche 403. Similairement, une travée arrière droite 7 de circulation s'étend le long de la première face longitudinale droite 104 et une travée avant droite 8 de circulation s'étend le long de la quatrième face longitudinale droite 404.

Comme visible en figures 2, la travée centrale arrière 3, la travée centrale avant 4, la travée arrière gauche 5, la travée avant gauche 6, la travée arrière droite 7 et la travée arrière avant droite 8 débouchent sur une avenue centrale 9 de circulation qui est bordée par la première face transversale avant 105, la deuxième face transversale arrière 206, la troisième face transversale avant 305 et la quatrième face transversale arrière 406. La travée centrale arrière 3, la travée arrière gauche 5 et la travée arrière droite 7 débouchent sur une avenue arrière 10 de circulation qui est bordée par la première face transversale arrière 106 et la troisième face transversale arrière 306. La travée centrale avant 4, la travée avant gauche 6 et la travée arrière avant droite 8 débouchent sur une avenue avant 11 de circulation qui est bordée par la deuxième face transversale avant 205, et la quatrième face transversale avant 405.

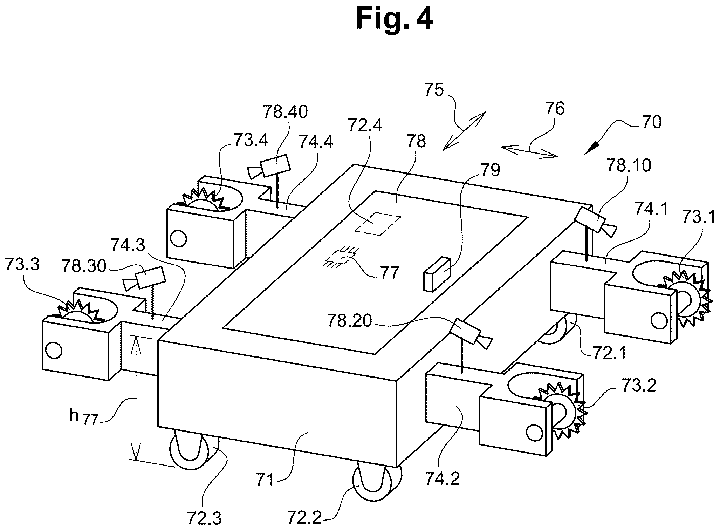

L'ensemble de stockage 1 est intégré à un système de préparation de commande 90 comprenant un premier chariot 70 à guidage automatisé et un deuxième chariot 80 à guidage automatisé reliés à une unité 91 de contrôle et de commande pourvue de moyens de communication sans fil 92 avec le premier chariot 70 et le deuxième chariot 80. Le système de préparation de commande 90 comprend également une aire de prélèvement 93 pourvue d'une rampe de déchargement 94. En référence à la figure 4, le premier chariot 70 possède un corps 71 forme sensiblement parallélépipédique et comprend quatre roues 72.1 à 72.4 de roulage motorisées ainsi qu'une première roue dentée 73.1, une deuxième roue dentée 73.2, une troisième roue dentée 73.3 et une quatrième roue dentée 73.4. Les roues de roulage 72.1 à 72.4 permettent au premier chariot 70 de se déplacer sur le sol 2 en avant et en arrière selon une direction principale 75 et d'effectuer des virages. Les roues dentées 73.1 à 73.4 sont respectivement montées sur les extrémités d'un premier bras 74.1 rétractable, d'un deuxième bras 74.2 rétractable, d'un troisième bras 74.3 rétractable et d'un quatrième bras 74.4 rétractable se déployant du corps 71 parallèlement à une direction transversale 76 orthogonale à la direction principale 75 et sensiblement parallèle au sol 2. Les roues dentées 73.1 à 73.4 sont montées à rotation autour d'un axe sensiblement parallèle à la direction principale 75.

L'ensemble des actionneurs du chariot qui mettent en mouvement les roues 72.1 à 72.4 de roulage, les roues dentées 73.1 à 73.4 ainsi que les actionneurs de rétraction des bras rétractables 74.1 à 74.4 sont reliés à une unité de pilotage 77 pourvue de moyen de communication sans fil avec l'unité de contrôle et de commande 91.

Une première caméra 78.10 est fixée au premier bras 74.1 pour capturer une image de la première roue dentée 73.1 et son environnement. De manière homologue, une deuxième caméra 78.20 une troisième caméra 78.30 et une quatrième caméra 78.40 sont respectivement fixées au deuxième bras 74.22, au troisième bras 74.3 et au quatrième bras 74.4 pour respectivement capturer une image de la deuxième roue dentée 73.2 et son environnement, une image de la troisième roue dentée 73.3 et son environnement et une image de la quatrième roue dentée 73.4 et son environnement. Les caméras 78.10à 78.40 sont reliées à l'unité de pilotage 77.

Le premier chariot 70 reçoit un plateau supérieur 78 monté pour coulisser en saillie du corps 71 selon la direction transversale 76. Le plateau 78 comprend un ergot 79 qui s'étend en saillie dans un plan orthogonal à celui du plateau 78. La surface supérieure du plateau 78 s'étend à une distance h78 -ici égale à deux-cent soixante millimètres- du sol 2 lorsque les roues 72.1 à 72.4 du premier chariot 70 reposent sur le sol 2.

Le deuxième chariot 80 est de construction identique à celle du premier chariot 70.

Comme plus particulièrement visible en figure 1 et 5, un premier treillis 501 s'étend dans un premier plan 502 vertical. La première face longitudinale droite 104 et la deuxième face longitudinale droite 204 sont également comprises dans le premier plan 502. Le premier treillis 501 est composé de cornières en acier 503 boulonnées pour réaliser des systèmes triangulés 504 qui relient le premier montant avant droit 112 et le deuxième montant arrière droit 210. Le premier treillis 501 s'étend depuis la première face supérieure 102 et possède une première extrémité inférieure 501.1 éloignée du sol 2 d'une hauteur de passage Hₚₐₛ égale à quatre-cent quatre-vingt-cinq millimètres.

Le premier treillis 501 assure ainsi une reprise des efforts horizontaux du premier rack 100 par le deuxième rack 200 et vice-versa, augmentant la résistance du premier rack 100 aux efforts horizontaux.

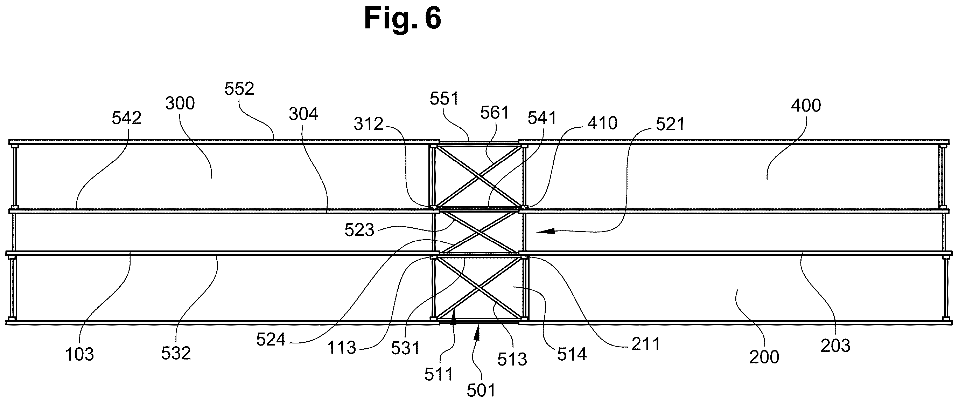

Comme visible en figure 6, un deuxième treillis 511 s'étend dans un deuxième plan 512 horizontal. La première face supérieure 102 et la deuxième face supérieur 202 sont également comprises dans le deuxième plan 512. Le deuxième treillis 511 est composé de cornières en acier 513 boulonnées pour réaliser des systèmes triangulés 514 qui relient les arêtes supérieures du premier rack 100 et du deuxième rack 200.

Un troisième treillis 521 s'étend dans le deuxième plan 512 horizontal qui comprend également, ici, la troisième face supérieure 302 et la quatrième face supérieur 402. Le troisième treillis 521 est composé de cornières en acier 523 boulonnées pour réaliser des systèmes triangulés 524 qui relient le premier montant avant gauche 113, le deuxième montant arrière gauche 211, le troisième montant avant droit 312 et le quatrième montant arrière droit 410.

Le premier treillis 501, le deuxième treillis 511 et le troisième treillis 521 appartiennent à une structure de contreventement horizontal 500.

La structure de contreventement horizontal 500 peut également comprendre un quatrième treillis 531 s'étendant dans un quatrième plan vertical 532 qui comprend également, ici, la première face longitudinale gauche 103 et la deuxième face longitudinale gauche 203. Le quatrième treillis 531 pouvant être identique au premier treillis 501.

La structure de contreventement horizontal 500 peut également comprendre un cinquième treillis 541 s'étendant dans un cinquième plan vertical 542 qui comprend également, ici, la troisième face longitudinale droite 304 et la quatrième face longitudinale droite 404. Le quatrième treillis 531 pouvant être identique au premier treillis 501.

La structure de contreventement horizontal 500 peut également comprendre un sixième treillis 551 s'étendant dans un sixième plan vertical 552 qui comprend également, ici, la troisième face longitudinale gauche 303 et la quatrième face longitudinale gauche 403. Le sixième treillis 551 pouvant être identique au premier treillis 501.

La structure de contreventement horizontal 500 peut également comprendre un septième treillis 561 s'étendant dans un sixième plan 552 horizontal qui comprend également, ici, la troisième face supérieure 302 et la quatrième face supérieur 402. Le septième treillis 561 relie les arêtes supérieures du troisième rack 300 et du quatrième rack 400. De manière homologue, d'autres treillis horizontaux similaires au deuxième treillis 511, au troisième treillis 521 ou au quatrième treillis 531 peuvent s'étendre entre deux ou plusieurs racks parmi le premier rack 100, le deuxième rack 200, le troisième rack 300 et/ou le quatrième rack 400.

La structure de contreventement horizontal 500, en s'arrêtant à une distance Hₚₐₛ du sol 2, autorise la circulation du premier chariot 70 et du deuxième chariot 80 dans l'avenue centrale 9 lorsqu'ils ne portent aucun conteneur ou un des conteneurs inférieurs ou supérieurs. Lorsque le premier chariot et/ou le deuxième chariot portent un conteneur intermédiaire, l'unité 91 les pilote de manière à ce qu'ils ne circulent pas dans l'avenue centrale 9.

En fonctionnement, lorsque l'on souhaite prélever un article stocké dans une des alvéoles de stockage du système de préparation de commande 90- par exemple un article stocké dans le premier conteneur inférieur avant gauche 151- cette demande de prélèvement est traitée par l'unité 91. L'unité 91 pilote le premier chariot 70 pour l'amener dans la travée de circulation centrale arrière 3, de manière à ce que la première roue dentée 73.1, la deuxième roue dentée 73.2, la troisième roue dentée 73.3 et la quatrième roue dentée 73.4 fassent respectivement face au premier montant avant gauche 113, au premier montant intermédiaire gauche 115, au troisième montant avant droit 312 et au troisième montant intermédiaire droit 314.

L'unité de pilotage 77 commande alors le déploiement du premier bras 74.1. Comme visible en figure 24, la première roue dentée 73.1 vient sensiblement en face de la première chaine avant 170.3. Au cours du déploiement du premier bras 74.1, la première caméra 78.10 transmet à l'unité de pilotage 77 une première image de la position relative de la première roue dentée 73.1 et de la première chaine 170.3. Sur la base d'une analyse de cette image, l'unité de de pilotage 77 peut ajuster le positionnement relatif du robot 70 et du premier montant avant gauche 113 en commandant les roues 72.1 à 72.4. Une fois le positionnement relatif de la première chaîne 170.3 et de la première roue dentée 73.1 effectué, l'unité de pilotage 77 commande le déploiement du premier bras 74.1 jusqu'à engrènement de la première roue dentée 73.1 avec la première chaîne 170.3. De manière homologue, l'unité de pilotage 77 réalise le déploiement du deuxième bras 74.2 puis du troisième bras 74.3 et du quatrième bras 74.4 tout en ajustant la position du premier chariot 70 de manière à amener la deuxième roue dentée 73.2, la troisième roue dentée 73.3 et la quatrième roue dentée 73.4 engrènent respectivement avec la première chaine intermédiaire gauche 170.5, la troisième chaine intermédiaire droite 370.4 et la troisième chaine avant droite 370.2. Le déplacement du premier chariot 70 pour ajuster la position relative des roues dentées 73.1 à 73.4 avec les chaînes 170.3, 170.5, 370.2 et 370.4 est notamment facilité par la souplesse des bras 74.1 à 74.4 selon la direction principale 75 -et ce que les déploiements des bras soient simultanés ou successifs.

Une rotation des roues dentées 73.1 à 73.4 dans un premier sens de rotation permet au premier chariot 70 de grimper relativement au premier rack 100 et au troisième rack 300 selon une direction verticale jusqu'à se trouver à un niveau sensiblement inférieur à celui de la première paire de glissières inférieures avant 121. Le plateau 78 est déployé pour s'étendre sous le fond du premier conteneur avant gauche 151. Une rotation supplémentaire des roues dentées 73.1 à 73.4 permet à l'ergot 78 de venir coopérer avec un orifice 151.1 homologue du fond du conteneur 151. L'unité 91 commande ensuite une rétraction du plateau 78 puis une rotation des roues dentées 73.1 à 73.4 dans un deuxième sens de rotation opposé au premier sens de rotation pour amener le premier chariot 70 au contact du sol 2.

Une fois que les roues 72.1 à 72.4 du premier chariot 70 sont au contact du sol 2, l'unité de pilotage 77 commande une rétraction des bras télescopiques 74.1 à 74.4 et pilote le premier chariot 70 jusqu'à l'aire de prélèvement 93 et la rampe 94. Après qu'un opérateur a prélevé l'article dans le premier conteneur avant gauche 151 et validé ce prélèvement, l'unité 91 commande le premier chariot 70 pour qu'il replace le premier conteneur avant gauche 151 dans la première alvéole inférieure avant 140 de stockage.

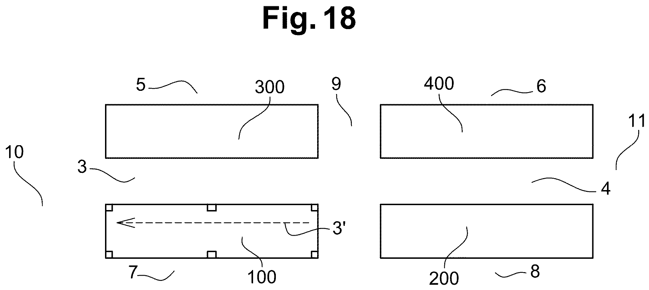

Lorsque le premier chariot 70 et le deuxième chariot 80 sont utilisés simultanément, il peut arriver que le premier chariot 70 et le deuxième chariot 80 doivent circuler dans une même travée -ici, par exemple la travée centrale arrière 3- pour avoir accès à des conteneurs ou rejoindre l'aire de prélèvement 93. L'alignement du premier volume avant 190 de passage libre et du premier volume arrière 191 de passage libre permet la création d'une première travée centrale arrière supplémentaire 3' de circulation qui s'étend alors sous la première alvéole inférieure avant 140 et la première alvéole inférieure arrière 144. La première travée centrale arrière supplémentaire 3' autorise une circulation du premier chariot 70 et/ou du deuxième chariot 80 depuis la première face transversale avant 105 du premier rack 100 vers la première face transversale arrière 106 du premier rack 100. La circulation du premier chariot 70 et/ou du deuxième chariot 80 peut se faire y compris lorsque ceux-ci transportent un conteneur similaire au premier conteneur inférieur avant droit 150 ou au premier conteneur supérieur avant droit 154. Lors du transport d'un conteneur similaire au premier conteneur intermédiaire avant droit 152 de hauteur supérieure, l'unité 91 commande le premier chariot 70 ou le deuxième chariot 80 ainsi chargé pour qu'il n'emprunte pas la première travée arrière supplémentaire 3' (figure 18).

Bien évidemment, le deuxième rack 200, le troisième rack 300 et le quatrième rack 400 comportent eux également des volumes avant et arrière de passage libre pour créer d'autres travées de circulation supplémentaires.

Bien entendu, l'invention n'est pas limitée au mode de réalisation décrit mais englobe toute variante entrant dans le champ de l'invention telle que définie par les revendications.

En particulier,
- bien qu'ici la profondeur du premier rack soit égale à neuf cent cinquante millimètres correspondant à deux conteneur de quatre cent cinquante millimètres de profondeur séparés par un jeu de cinq millimètres, l'invention s'applique également à d'autres valeurs de profondeur de racks supérieur ou inférieur à neuf cent cinquante millimètres pour accueillir un unique conteneur en profondeur ou deux conteneurs séparé d'un jeu plus réduit ou plus faible ;
- bien qu'ici la première et la deuxième distance de base soient égales à quatre cent quatre-vingt-quinze millimètres, l'invention s'applique également à d'autres valeurs de distance de base, supérieure à la distance minimale qui correspond à la plus faible hauteur des alvéoles de stockage, à laquelle à préférentiellement été ajoutée la hauteur de transport qui sépare le sol d'un plateau du chariot lorsqu'il repose sur le sol ;
- bien qu'ici la première distance inférieure qui sépare les glissières inférieures des glissières intermédiaires soit égale à deux cent vingt-cinq millimètres pour réserver cinq millimètres de jeu au conteneur, l'invention s'applique également à d'autres valeurs de première distance inférieure pouvant inclure un jeu supérieur ou inférieur à cinq millimètres. Il en va de même pour les premières distances intermédiaires et supérieures ;
- bien qu'ici la première distance supérieure qui sépare les glissières intermédiaires des glissières supérieures soit égale à trois cent vingt-cinq millimètres, l'invention s'applique également à d'autres valeurs de première distance supérieure pour par exemple obtenir un rack dans lequel toutes les alvéoles de stockage sont de dimensions identiques ;
- bien qu'ici le premier rack comprenne un premier montant intermédiaire séparant deux éléments de rack comprenant chacun une colonne d'alvéoles de stockage, l'invention s'applique également à d'autres configurations de racks comme par exemple un rack comprenant un nombre différent de montants intermédiaires, comme par exemple aucun montant intermédiaire, deux montants intermédiaire ou plus ;
- bien qu'ici la première distance minimale soit égale à la première distance inférieure -ici deux cent vingt-cinq millimètres, l'invention s'applique également à d'autres valeurs de la première distance minimale et qui correspond à la plus faible des hauteurs des alvéoles de stockage, comme par exemple la hauteur d'une autre alvéole ;
- bien qu'ici les montants d'une même face longitudinale soient équidistants, l'invention s'applique également à des montants séparés par des distances différentes ;
- bien qu'ici les montants des éléments de rack soient fixés au sol à l'aide de platines d'ancrage boulonnées sur des tiges d'ancrages, l'invention s'applique également à d'autres moyens de solidarisation d'un élément de rack à une surface d'appui comme par exemples des crosses d'ancrage, une liaison soudée à une platine d'ancrage, un unique ancrage sur une seul montant ;
- bien qu'ici les glissières soient réalisées sous la forme de cornières métalliques, l'invention s'applique également à d'autres types de glissières comme par exemple des profilés carrés ou cylindriques en PTFE ou autre matière synthétique ;
- bien qu'ici les glissières soient boulonnées aux montants, l'invention s'applique également à d'autres moyens de liaison des glissières au montant comme par exemple du vissage, du soudage ou de l'encliquetage ;
- bien qu'ici le premier rack comprenne deux éléments de rack pour définir deux colonnes de trois alvéoles de stockage, l'invention s'applique également à d'autres configurations de racks comme par exemple un rack comprenant un unique élément de rack ou plus de deux pour définir un nombre différent de colonnes pouvant contenir un nombre différent d'alvéoles de stockage ;
- bien qu'ici la direction d'empilement soit verticale, l'invention s'applique également à d'autres orientation pour la direction d'empilement comme par exemple une direction à 45 degrés par rapport à la verticale ou quelconque ;
- bien qu'ici les alvéoles de stockage renferment des conteneurs de deux tailles différentes, l'invention s'applique également à des alvéoles accueillant d'autres éléments de stockage comme par exemple des plateaux, des palettes ou des produits bruts ;
- bien qu'ici la première section avant de passage ait une deuxième dimension selon une direction transversale reliant les premières faces longitudinales soit sensiblement égale à la première profondeur p100, l'invention s'applique également à d'autres valeurs pour la deuxième dimension selon une direction transversale, préférentiellement une deuxième dimension selon une direction transversale sensiblement égale à la moitié de la longueur d'une paire de glissière ;
- bien qu'ici les montants soient pourvus de chaines de grimpe à trois cents maillons, l'invention s'applique également à d'autres types d'éléments de grimpe comme par exemple des courroies crantées, des crémaillères, des chaines à maillons doubles ou de type Galle, des câbles filetées ou torsadées. Les éléments de grimpe peuvent également être deux types différents comme par exemple une première chaine à trois cent mailons et une deuxième chaine à cent cinquante maillons ;
- bien qu'ici le premier montant avant gauche soit un profilé en U perforé, l'invention s'applique également à d'autres types de montant comme par exemple des tubes carrés, cylindriques des profilés IPE, IPN ou HEA perforés ou non ;
- bien qu'ici le dispositif de guidage inférieur soit boulonné sur le montant au moyen de boulons engagés dans des pattes de fixation, l'invention s'applique également à un dispositif de guidage pourvu d'autres moyens de fixation à un montant comme par exemple du vissage, du soudage, du collage ou de l'encliquetage ;
- bien qu'ici le dispositif de guidage inférieur comprenne un orifice d'accueil d'une extrémité inférieure de chaine et une broche de liaison, l'invention s'applique également à un dispositif de guidage inférieur dépourvu de moyens de liaison à une extrémité de chaine, à un connecteur inférieur de chaine dépourvu de moyens de guidage et à un dispositif de guidage pourvu d'autres types de moyens de liaison d'une extrémité de chaine comme par exemple un crochet ou une vis engagée dans un maillon ;
- bien qu'ici le connecteur supérieur soit boulonné sur le montant, l'invention s'applique également à un connecteur supérieur pourvu d'autres moyens de fixation à un montant comme par exemple du vissage, du soudage, du collage ou de l'encliquetage ;
- bien que les étapes du procédé de calage des montants entre eux aient été décrites l'une après l'autre, l'invention s'applique également à un procédé dans lequel certaines étapes sont effectuées simultanément ou dans un ordre différent ;
- bien qu'ici des cavaliers soient liés aux montants pour recevoir un profilé de support, l'inventions 'applique également à d'autres type de support d'un profilé de support de chaine comme par exemple des supports tubulaires, des supports absorbeurs de vibrations ou encore aucun support ;
- bien qu'ici le premier profilé soit en forme de U, l'invention s'applique également à d'autres types de profilé de support de chaine comme par exemple un profilé en C, ;
- bien qu'ici un plat en nitrile soit posé entre la chaîne et le profilé support, l'invention s'applique également à d'autres types d'élément amortisseur comme par exemple un plat en néoprène, en mousse en EPDM ou une pluralité de plots élastomères. De la même façon, d'autres sections sont possibles pour l'élément amortisseur comme par exemple une section en U ou autre ;
- bien qu'ici la distance L46 soit ajustée à une valeur égale à vingt-deux millimètres, l'invention s'applique également à d'autres troisième valeurs prédéterminées de la quatrième distance séparant le deuxième connecteur supérieur de la deuxième extrémité supérieure du deuxième élément de grimpe comme par exemple plus que vingt-deux millimètres ou moins ;
- bien qu'ici la distance L_{170.3} soit ajustée à une valeur égale à deux mille cinq cent millimètres, l'invention s'applique également à d'autres valeurs pour la première distance prédéterminée qui sépare la première extrémité inférieure et la première extrémité supérieure de la première chaîne ;
- bien qu'ici les montants soient positionnés verticalement, parallèlement à la direction de grimpe verticale, l'invention s'applique également à d'autres orientations de la direction de grimpe comme par exemple un direction d grimpe à 45 degrés par rapport à la verticale ou quelconque, le plan de réglage des premiers et deuxième connecteurs devant alors être orthogonal à la direction de grimpe ;
- bien qu'ici le dispositif inférieur de guidage comprenne une oreille, l'invention s'applique également à un dispositif inférieur de guidage dépourvu de moyens de liaison d'un profilé support d'élément de grimpe ou d'un autre type de liaison de profilé comme par exemple un méplat ou un téton ;
- bien qu'ici le premier chariot comprenne des roues de roulage, l'invention s'applique également à d'autres moyens de déplacement du chariot sur le sol comme par exemple des chenilles, un coussin d'air, un crochet pour engagement dans un chemin de halage ;
- bien qu'ici le premier chariot comprenne des roues dentées, l'invention s'applique également à tout autre moyen de grimpe motorisé pouvant coopérer avec les montants pour permettre au chariot de s'élever le long de ces montants comme par exemple des chenilles magnétiques ou une vis sans fin ;
- bien qu'ici le premier treillis s'étende dans un premier plan comprenant la première face longitudinale droite et la deuxième face longitudinale droite, l'invention s'applique également d'autres implantations du premier élément de structure de contreventement horizontal comme par exemple un premier treillis s'étendant dans un plan comprenant une seule des première ou deuxième face longitudinale au aucune des deux, le treillis pouvant s'étendre dans un plan ayant une orientation quelconque par rapport à un plan vertical ;
- bien qu'ici le deuxième treillis s'étende dans un deuxième plan comprenant la première face supérieure et la deuxième face supérieure, l'invention s'applique également à d'autres implantations du deuxième élément de structure de contreventement horizontal comme par exemple un deuxième treillis s'étendant dans un plan comprenant une seule des première ou deuxième face supérieure ou aucune des deux, le treillis pouvant s'étendre dans un plan ayant une orientation quelconque par rapport à un plan horizontal ;
- bien qu'ici le troisième treillis s'étende dans le deuxième plan horizontal, l'invention s'applique également à d'autres implantations du troisième élément de structure de contreventement horizontal comme par exemple un troisième treillis s'étendant dans un plan ne contenant aucune des faces supérieures des racks, le treillis pouvant s'étendre dans un plan ayant une orientation quelconque par rapport à un plan horizontal ;
- bien qu'ici le treillis soit composé de cornières en acier boulonnées pour forme des systèmes triangulés, l'invention s'applique également à d'autres types de contreventement comme par exemple des treillis en tube, boulonnés ou soudés, les éléments composant le treillis pouvant être en d'autres matériaux ferreux ou non voire synthétique. Le treillis peut également comprendre un voile rigide, des câbles, etc.. ;
- bien qu'ici le plateau comprenne un ergot de liaison à un conteneur, l'invention s'applique également à d'autres moyens de liaison à un conteneur comme par exemple plusieurs ergots, un crochet ou un aimant ;
- bien qu'ici le premier treillis soit monté après la mise en tension de la première chaine, la mise en place du premier treillis se fait préférentiellement avant la mise en tension de la première chaine ;
- bien qu'ici le positionnement du robot relativement aux chaines soit réalisé à l'aide de caméras, l'invention s'applique également à d'autres types de capteurs pouvant assister une opération de positionnement comme par exemple un capteur ultra sonique, infrarouge, lidar ou radar.

## Revendications

1. Ensemble de stockage (1) comprenant un premier rack (100) de stockage sensiblement parallélépipédique et un deuxième rack (200) de stockage sensiblement parallélépipédique,
le premier rack (100) comportant une première face inférieure (101) destinée à venir en appui sur une surface d'appui, une première face supérieure (102) parallèle à la première face inférieure (101), une première face longitudinale droite (104) et une première face longitudinale gauche (103) qui relient une première face transversale avant (105) et une première face transversale arrière (106), le premier rack définissant une pluralité de premières alvéoles de stockage (140-146) superposées selon une première direction d'empilement s'étendant entre la première face inférieure (101) et la première face supérieure (102), la pluralité de premières alvéoles de stockage (140-146) étant accessibles depuis la première face longitudinale gauche (103) et depuis la première face longitudinale droite (104), les premières alvéoles de stockage (140-146) étant séparées l'une de l'autre selon la première direction d'empilement par une première distance minimale ;
le deuxième rack (200) comportant une deuxième face inférieure (201) destinée à venir en appui sur une surface d'appui, une deuxième face supérieure (202) parallèle à la deuxième face inférieure (201), une deuxième face longitudinale droite (204) et une deuxième face longitudinale gauche (203) qui relient une deuxième face transversale avant (205) et une deuxième face transversale arrière (206), le deuxième rack (200) définissant une pluralité de deuxièmes alvéoles de stockage (240-246) superposées selon une deuxième direction d'empilement s'étendant entre la deuxième face inférieure (201) et la deuxième face supérieure (202), les deuxièmes alvéoles de stockage étant accessibles depuis la deuxième face longitudinale gauche (203) et depuis la deuxième face longitudinale droite (204), les deuxièmes alvéoles des stockage (240-246) étant séparées l'une de l'autre selon la première direction d'empilement par une deuxième distance minimale ;
la première face transversale avant (106) et la deuxième face transversale arrière (205) se faisant face en étant séparées par une distance non nulle et étant reliées l'une à l'autre par au moins une structure de contreventement horizontal (500),
la structure de contreventement horizontal (500) comprenant un premier élément de contreventement (501) s'étendant dans un premier plan comprenant la première face longitudinale droite (104) ou la première face longitudinale gauche (103) et/ou la deuxième face longitudinale droite (204) ou la deuxième face longitudinale gauche (203),
le premier élément de contreventement (501) s'étendant depuis la première face supérieure (102) et/ou la deuxième face supérieure (202) jusqu'à une première distance prédéterminée de la première face inférieure et/ou de la deuxième face inférieure,
la première distance prédéterminée étant comprise entre 1 et 2 fois la première distance minimale ou la deuxième distance minimale.

2. Ensemble de stockage (1) selon la revendication 1, dans lequel chaque première alvéole (140-146) de la pluralité de premières alvéoles de stockage comprend une première paire de glissières parallèles (121-126) qui s'étendent entre la première face longitudinale droite (104) et la première face longitudinale gauche (103), les premières paires de glissière (121-126) étant séparées selon la première direction d'empilement de la première distance minimale.

3. Ensemble de stockage (1) selon la revendication 1 ou 2, dans lequel chaque deuxième alvéole (240-246) de la pluralité de deuxièmes alvéoles de stockage comprend une paire de glissières parallèles (221-226) s'étendant entre la deuxième face longitudinale droite (204) et la deuxième face longitudinale gauche (203).

4. Ensemble de stockage (1) selon l'une quelconque des revendications précédentes, dans lequel le premier élément de contreventement (501) comprend un premier treillis.

5. Ensemble de stockage (1) selon l'une quelconque des revendications précédentes, dans lequel la structure de contreventement horizontal (500) comprend également un deuxième élément de contreventement (511) s'étendant dans un deuxième plan (512) comprenant la première face supérieure (102) et/ou la deuxième face supérieure (202).

6. Ensemble de stockage (1) selon la revendication 5, dans lequel le deuxième élément de contreventement (511) comprend un deuxième treillis.

7. Ensemble de stockage (1) selon l'une quelconque des revendications précédentes comprenant également un troisième rack de stockage (300) sensiblement parallélépipédique et un quatrième rack de stockage sensiblement parallélépipédique (400), le troisième rack comportant une troisième face inférieure (301) destinée à venir en appui sur la surface d'appui, une troisième face supérieure (302) parallèle à la troisième face inférieure (301), une troisième face longitudinale droite (304) et une troisième face longitudinale gauche (303) qui relient une troisième face transversale avant (305) et une troisième face transversale arrière (306), une des troisièmes faces longitudinales droite (304) ou gauche (303) faisant face à une des premières faces longitudinales droite (104) ou gauche (103);
le quatrième rack (400) comportant une quatrième face inférieure (401) destinée à venir en appui sur la surface d'appui, une quatrième face supérieure (402) parallèle à la quatrième face inférieure (401), une quatrième face longitudinale droite (404) et une quatrième face longitudinale gauche (403) qui relient une quatrième face transversale avant (405) et une quatrième face transversale arrière (406), une des quatrièmes faces longitudinales droite (404) ou gauche (403) faisant face à une des deuxièmes faces longitudinales droite (204) ou gauche (203) ;
la structure de contreventement horizontal (500) comprenant un troisième élément de contreventement (521) s'étendant dans un troisième plan comprenant la première face supérieure (102) et/ou la deuxième face supérieure (202) et/ou la troisième face supérieure (302) et/ou la quatrième face supérieure (402),
le troisième élément (521) de contreventement reliant le premier rack (100), le deuxième rack (200), le troisième rack (300) et le quatrième rack (400).

8. Ensemble de stockage (1) selon la revendication 7, dans lequel le troisième élément de contreventement (521) comprend un troisième treillis.

9. Système de préparation de commande comprenant un ensemble de stockage (1) selon l'une quelconque des revendications précédentes, comprenant un chariot à guidage automatisé (70, 80) pourvu d'un plateau (78) de manutention d'un colis.
